# FASCICULE DE BREVET EUROPEEN

(11) **EP 2 581 798 B1**
(45) Date de publication et mention de la délivrance du brevet: **08.02.2017**
(21) Numéro de dépôt: 12006436.5
(22) Date de dépôt: 13.09.2012
(51) Int. Cl.: G05D 1/08, B64C 27/78, B64C 13/22, B64C 13/44

(54) **Système de pilotage en lacet pour giravion mettant en oeuvre un organe mobile de commande entrainé par le pilote et qui génère des commandes de vol par objectif**
Yaw axis control system for rotorcraft using a pilot-operated interface unit that generates target flight commands
Lenksystem der Gierbewegung für Dreflügelflugzeug, bei dem ein vom Menschen angetriebenes Organ und eine zielorientierte Flugsteuerung im Einsatz kommen

(30) Priorité: 10.10.2011 FR 1103067
(43) Date de publication de la demande: 17.04.2013
(73) Titulaire: Airbus Helicopters, 13725 Marignane Cedex (FR)
(72) Inventeur: Mezan, Serge, 13960 Sausset les Pins (FR)
(74) Mandataire: GPI & Associés

(56) Documents cités:
- WO-A1-93/05460
- US-A- 3 528 633
- US-A- 4 392 203

## Description

La présente invention est du domaine des aéronefs à voilure tournante, et plus particulièrement des systèmes de commande affectés au pilotage directionnel en lacet d'un giravion, hélicoptère notamment.

Elle a pour objet un système de commande de vol en lacet pour giravion, mettant en oeuvre au moins un organe du type entraîné par l'homme, pilote humain du giravion notamment, et des moyens de calcul provoquant une manoeuvre d'actionneurs qui sont affectés à la mise en oeuvre d'un rotor anti-couple équipant le giravion.

Les giravions sont équipés de rotors mettant en oeuvre une voilure tournante composée d'une pluralité de pales, qui sont radialement réparties autour d'un axe d'entraînement en rotation de la voilure tournante. Un rotor principal à axe sensiblement vertical par rapport au giravion procure la sustentation voire aussi la propulsion de ce giravion et/ou sa manoeuvre suivant plusieurs directions, en tangage, en roulis et en élévation notamment. Un dispositif anti-couple procure une manoeuvre du giravion en rotation sur lui-même autour d'un axe de lacet. Un tel dispositif anti-couple et notamment formé d'un rotor à axe sensiblement horizontal par rapport au giravion. Un tel rotor à axe sensiblement horizontal est couramment formé d'un rotor de queue, voire encore d'une hélice propulsive dans le cadre d'un giravion à grande vitesse de translation et à long rayon d'action.

Le giravion est équipé d'une pluralité d'organes mobiles de commande du type entraînés par l'homme pour piloter le giravion. Les organes mobiles de commande génèrent des commandes de vol à partir de leur entraînement par un pilote humain du giravion, qui provoquent une manoeuvre des pales des rotors pour en modifier le pas, cycliquement ou collectivement.

Les organes mobiles de commande affectés à la manoeuvre du rotor principal sont traditionnellement agencés en organe à manoeuvre manuelle par le pilote humain du giravion, tel qu'en manche ou en levier articulés au plancher du giravion, ou encore en manette implantée dans l'accoudoir d'un siège sur lequel est installé le pilote humain.

Un organe mobile de commande de pas cyclique permet au pilote humain de modifier l'angle d'incidence des pales du rotor principal de façon différentielle, pour intervenir sur l'orientation du giravion en tangage et en roulis. Un organe mobile de commande de pas collectif des pales du rotor principal, permet au pilote humain de modifier globalement le pas de chaque pale et en conséquence de modifier la portance de la voilure tournante, pour faire varier l'élévation du giravion.

L'organe mobile de commande affecté à la manoeuvre par le pilote humain du rotor anti-couple est traditionnellement agencé en palonnier comprenant un jeu de pédales. Le palonnier permet au pilote humain de modifier globalement l'angle d'incidence des pales du rotor anti-couple, et de faire varier la poussée qu'il génère en queue du giravion. Une poussée du rotor anti-couple permet donc soit une manoeuvre en lacet, soit de compenser le couple en lacet généré par le rotor principal, une variation de la propulsion du giravion à partir du rotor principal impliquant une commande concomitante du rotor anti-couple pour ajuster en correspondance l'effet qu'il produit.

Selon des formes particulières de réalisation de l'organe mobile de commande du rotor anti-couple, le palonnier est remplacé par un manche ou par une manette qui sont articulés au plancher du giravion ou sur un siège de pilotage.

Par exemple selon FR2918348 (FRANCE ETAT), les commandes normalement opérables par le pilote humain sur le palonnier sont transférées vers un manche, pour permettre à un pilote humain paraplégique de commander le giravion en lacet en l'absence de l'usage de ses jambes.

Par exemple encore selon US5395077 (WOLFORD T.), le palonnier est supprimé en étant remplacé par une manette de commande.

Traditionnellement, les organes mobiles de commande sont reliés aux rotors par l'intermédiaire d'une chaîne cinématique correspondante. Ces chaînes cinématiques comprennent notamment un mécanisme de transmission mécanique distante qui est interposé entre un organe mobile de commande manoeuvrable par le pilote humain et au moins un rotor qui lui est affecté. De tels mécanismes de transmission mécanique distante sont communément agencés en bielles, en tringles, en câbles et/ou autres organes de transmission mécanique distante analogues.

La chaîne cinématique est de préférence équipée d'une servocommande qui procure un contrôle précis du fonctionnement des rotors et/ou qui permet d'amplifier en puissance les commandes de vol transmises à travers la chaîne cinématique. Une commande de vol transmise vers la servocommande est logiquement comparée avec l'état des pales du rotor pour détecter une erreur, et la différence de valeur issue de la comparaison est amplifiée et utilisée pour effectuer une correction de l'erreur détectée.

Pour améliorer le confort du pilote humain, il a été proposé des organes mobiles de commande qui génèrent des signaux électriques, qui sont traités par un calculateur intermédiaire pour provoquer la manoeuvre de servocommandes que comprend la chaîne cinématique. Une commande de vol ordonnée par le pilote humain à partir d'un entraînement de l'organe mobile de commande, n'est pas mécaniquement transmise au rotor correspondant par l'intermédiaire du mécanisme de transmission mécanique distante qui lui est affecté, mais génère des signaux électriques. Ces signaux électriques sont pris en compte par le calculateur intermédiaire, qui transmet à une servocommande des commandes d'activation de sa mise en oeuvre. La mise en oeuvre de la servocommande provoque une variation du pas des pales par l'intermédiaire d'un mécanisme de transmission mécanique.

Les giravions sont aussi couramment équipés d'un pilote automatique substitutif, en cas de besoin, des organes mobiles de commande du type entraînés par l'homme. L'activation du pilote automatique est réalisée à partir d'un ordre d'exécution émis par un pilote humain au moyen d'un organe mobile de commande du type entraîné par l'homme, tel qu'agencé en bouton de commande ou organe de commande analogue.

Dans une fonction de tenue de référence, le pilote automatique manoeuvre la chaîne cinématique en fonction d'une consigne de vol de référence. La consigne de vol de référence est préalablement émise par le pilote humain ou est déterminée par le pilote automatique à partir d'informations de constat relatives à un état de progression du giravion. Une activation du pilote automatique induit un maintien de progression du giravion au regard des informations de constat évaluées à l'instant de cette activation.

Plus particulièrement, le pilote automatique exploite des moyens de calcul qui génèrent des ordres automatisés de mise en oeuvre d'actionneurs affectés au fonctionnement des rotors. Le pilote automatique comprend des calculateurs qui mettent en oeuvre des lois de pilotage relatives au fonctionnement des rotors, pour maintenir une progression contrôlée du giravion en l'absence de commandes de vol opérées par le pilote humain par l'intermédiaire des organes mobiles de commande du type entraînés par l'homme.

Selon la fonction de tenue de référence procurée par le pilote automatique, un état de progression du giravion est maintenu par une intervention du pilote automatique sur la mise en oeuvre des actionneurs, à partir d'une comparaison entre la consigne de vol de référence et un état effectif de progression du giravion. La consigne de vol de référence est une information figée à laquelle le pilote automatique fait référence pour corriger en permanence l'état de progression du giravion. Une telle correction est commandée par le pilote automatique en fonction de l'état effectif de progression du giravion, qui est établi à partir d'informations de constat qui sont fournies par divers moyens de mesure et de calcul dont le giravion est équipé.

Les actionneurs sont couramment agencés en vérins, électriques ou de préférence hydrauliques considérés comme plus réactifs. Les actionneurs sont communément dénommés respectivement actionneur « trim » et actionneur « série ».

L'actionneur « trim » est un organe bidirectionnel qui est placé sur la chaîne cinématique en parallèle du palonnier, pour transmettre une commande de vol vers le rotor par l'intermédiaire de la chaîne cinématique. L'actionneur « trim » permet de manoeuvrer la chaîne cinématique en substitution de l'organe mobile de commande. L'actionneur « série » est un organe bidirectionnel qui est placé en série sur la chaîne cinématique et qui est notamment exploité pour stabiliser la manoeuvre du rotor.

Le pilote automatique génère des commandes d'activation de l'actionneur « série » pour intervenir sur le comportement du rotor. L'actionneur « trim » est susceptible d'être activé pour recentrer l'actionneur « série », et remédier à l'autorité réduite de l'actionneur « série ».Diverses architectures de systèmes de commande de vol automatisés ont été proposées.

Par exemple selon EP0296951 (AEROSPACIALE), des informations en provenance d'une pluralité d'organes mobiles de commande équipant un aéronef, sont regroupées et traitées par un calculateur pour ordonner conjointement des manoeuvres de vol en roulis et en lacet.

Le document FR2339920 (SPERRY RAND CORP) décrit un système de commande pour aéronef intégrant un système d'augmentation de stabilité de l'aéronef et de manoeuvres de vol en lacet.

Il est plus particulièrement décrit par les documents WO9305460 (UNITED TECH. CORP) et WO9305460 (UNITED TECH. CORP), des systèmes de commande de vol pour giravion comprenant des moyens d'adaptation automatique des commandes de vol pour manoeuvrer le giravion en lacet.

Pour connaître un environnement technologique proche de la présente invention, on pourra encore se reporter aux documents US3528633 (KNEMEYER S.), US4392203 (FISCHER W.C. et al) et US4527242 (MCELREATH K.W.) qui décrivent divers dispositifs de commande de vol en lacet d'un giravion, comprenant des moyens de calcul intégrés à un pilote automatique équipant un giravion.

Il est plus spécifiquement connu dans le domaine de l'aéronautique des systèmes de commande de vol par objectif. Des organes mobiles de commande de vol entraînés par un pilote humain sont exploités pour générer des signaux électriques, qui correspondent à des commandes de vol par objectif relatives à un état de progression à atteindre de l'avion. Les commandes de vol par objectif sont transmises en continu à un calculateur d'objectif, qui détermine la mise en oeuvre d'actionneurs propres à modifier l'état de progression de l'aéronef. Le calculateur d'objectif génère des ordres de commande pour activer des actionneurs, à partir d'une comparaison entre les commandes de vol par objectif opérées par le pilote humain et des informations de constat relatives à un état de progression effectif de l'aéronef.

On pourra à ce propos se référer au document EP0718731 (EUROCOPTER FRANCE) qui décrit un tel système de commande de vol permettant de guider un giravion en pilotage par objectif.

Pour les giravions, il est parfois constaté dans la pratique des inconvénients relatifs au pilotage en lacet par l'intermédiaire du palonnier.

Par exemple en mode de pilotage manuel, pour une position du palonnier provoquée par le pilote humain, le taux induit de rotation du giravion autour de l'axe de lacet n'est pas constant en raison de l'influence de l'environnement extérieur et notamment des conditions de vent. Le pilote humain doit en conséquence adapter l'évolution dynamique de la manoeuvre du giravion en lacet et corriger la rotation du giravion selon le taux de rotation réellement obtenu.

Par exemple encore en mode de pilotage manuel, l'ensemble de la chaîne cinématique reliant le palonnier au rotor anti-couple comprend des organes mécaniques qui sont soumis à friction. Des jeux et des imprécisions de mobilité des organes mécaniques en mouvement que comprend la chaîne cinématique mécanique sont inévitables, au détriment du ressenti du pilote humain et de la pertinence de la transmission des commandes de vol vers le rotor anti-couple.

Il est aussi constaté en mode de pilotage automatique que le pilote humain peut intervenir involontairement sur le palonnier, en raison par exemple d'une posture inadéquate qu'il est susceptible de prendre au poste de pilotage et/ou en raison de la perception délicate du mouvement du palonnier par le pilote humain utilisant ses pieds chaussés pour son entraînement. Le pilote humain peut involontairement contrer l'action des actionneurs sur la chaîne cinématique, tel que le mouvement de l'actionneur « trim » exploité pour le recentrage de l'actionneur « série ». L'actionneur « série » peut être placé en saturation, avec pour conséquence une perte de stabilisation du giravion.

Dans une configuration de pilotage automatique du giravion, une intervention du pilote humain sur le palonnier induit une mise à l'arrêt de la fonction de tenue de référence par le pilote automatique, pour permettre au pilote humain de diriger directement le giravion. La fonction de tenue de référence par le pilote automatique peut être stoppée involontairement par le pilote humain, sans qu'il n'en prenne immédiatement conscience.

Le but de la présente invention est de proposer un système de commande de vol en lacet pour giravion et une méthode pour sa mise en oeuvre, qui améliorent l'interface entre le pilote humain et le système de commande de vol en lacet, pour remédier aux inconvénients qui ont été énoncés.

Le système de commande de la présente invention est un système de commande de vol en lacet d'un giravion équipé d'un rotor anti-couple.

Le système de commande comprend au moins une chaîne cinématique qui comporte un organe mobile de commande du type entraîné par l'homme, pilote humain du giravion notamment. Le système de commande comprend aussi des moyens de transmission qui sont interposés entre l'organe mobile de commande et le rotor anti-couple, pour acheminer une commande de vol générée par l'organe mobile de commande vers le rotor anti-couple pour sa manoeuvre. La manoeuvre du rotor anti-couple correspond notamment à une variation de pas collectif de pales dont il est équipé. Les moyens de transmission mettent notamment en oeuvre un mécanisme de transmission mécanique distante d'efforts, qui comprend de préférence une ou plusieurs servocommandes.

Des moyens de calcul sont susceptibles d'être exploités pour induire la mise en oeuvre d'un ou plusieurs actionneurs, qui provoquent une manoeuvre du mécanisme de transmission mécanique. De tels actionneurs sont notamment indifféremment formés d'un actionneur « trim » et/ou d'un actionneur « série » tels que précédemment décrits.

Les moyens de calcul sont notamment des moyens de traitement d'une commande de vol émise sous forme d'un signal électrique. Par exemple, un pilote automatique intègre de tels moyens de calcul pour fournir une fonction de tenue de référence, en étant mis en oeuvre par un organe de commande spécifique entraîné par le pilote humain du giravion. Un tel organe de commande spécifique est notamment agencé en bouton de commande ou organe de commande analogue actionnable par le pilote humain du giravion.

Le système de commande de la présente invention comprend plus particulièrement dans sa généralité :
*) au moins une première chaîne cinématique mettant en oeuvre un palonnier entraîné par un pilote humain. Le palonnier est en relation avec le rotor anti-couple par l'intermédiaire d'un mécanisme de transmission mécanique distante qui est apte à provoquer une variation de pas collectif de pales équipant le rotor anti-couple. Le palonnier est générateur d'une commande de vol mécanique qui est transmise au rotor anti-couple par l'intermédiaire du mécanisme de transmission mécanique distante, qui comprend de préférence au moins une servocommande.
*) au moins une deuxième chaîne cinématique comportant des actionneurs de mise en oeuvre du mécanisme de transmission mécanique distante, dont un « actionneur trim » et « un actionneur série ». La deuxième chaîne cinématique comporte aussi des moyens de calcul que comprend un pilote automatique. La mise en oeuvre des moyens de calcul est placée sous la dépendance d'un bouton de commande actionnable par un pilote humain. Un tel bouton de commande transmet aux moyens de calcul des signaux électriques relatifs à un ordre de tenue d'une consigne de référence. Une information modificative de l'ordre de tenue de la consigne de référence au moyen du bouton de commande relève par exemple d'une variation par incrémentation d'une consigne de référence préalable. Les moyens de calcul sont exploités par le pilote automatique, et induisent une activation d'au moins l'un des actionneurs de mise en oeuvre du mécanisme de transmission mécanique distante. Les actionneurs sont notamment constitués de l'actionneur « trim » placé sur la chaîne cinématique en parallèle du palonnier, et de l'actionneur « série » interposé sur le mécanisme de transmission mécanique distante. Les actionneurs provoquent une mise en oeuvre du dit mécanisme de transmission distante, en substitution de la première chaîne cinématique. On relèvera qu'un dit actionneur « trim » et un dit actionneur « série » sont susceptibles d'être regroupés en un même organe de mise en oeuvre du mécanisme de transmission mécanique distante. Par ailleurs, les modalités susvisées de mise en oeuvre du pilote automatique au regard de l'acquisition de la consigne de référence sont données à titre d'exemple, d'autres modalités d'acquisition et de traitement de ladite consigne de référence pouvant être mises en oeuvre par le pilote automatique.
*) des moyens d'inhibition de la mise en oeuvre au moins partielle de la deuxième chaîne cinématique de commande. La mise en oeuvre des moyens d'inhibition est placée sous la dépendance de moyens de détection d'un entraînement par l'homme du palonnier, pilote humain notamment. Un tel entraînement sur le palonnier est générateur d'efforts qui sont susceptibles d'être détectés aisément, par exemple par des moyens capteurs d'efforts sous la dépendance desquels est placée une activation des moyens d'inhibition. La deuxième chaîne cinématique est notamment inhibée au regard d'une fonction de tenue d'une consigne de référence.

Selon la présente invention, le système de commande est principalement reconnaissable en ce qu'il comprend une troisième chaîne cinématique qui intègre des moyens de pilotage par objectif. La mise en oeuvre des moyens de pilotage par objectif est placée sous la dépendance d'un organe mobile de commande spécifique du type entraîné par l'homme, pilote humain du giravion notamment. L'organe mobile de commande est émetteur d'un signal de commande sous l'effet de son entraînement par le pilote humain. Le signal de commande est émis vers un calculateur d'objectif, qui génère vers les moyens de calcul de la deuxième chaîne cinématique un ordre de commande en lacet relatif à un état de progression à atteindre du giravion. L'ordre de commande est exploité par les moyens de calcul que comprend la deuxième chaîne cinématique pour activer au moins l'un des actionneurs et induire une variation de pas collectif du rotor anti-couple en fonction du signal de commande émis par l'organe mobile de commande et d'un état de progression à atteindre du giravion défini par le calculateur d'objectif.

La mise en oeuvre de la troisième chaîne cinématique est placée sous la dépendance des moyens d'inhibition, une intervention par le pilote humain sur le palonnier désactivant la mise en oeuvre de la troisième chaîne cinématique. Il est choisi de procurer au pilote humain la faculté prioritaire de disposer de la première chaîne cinématique pour manoeuvrer les pales du rotor anti-couple.

Le pilote humain dispose de la possibilité de maintenir éloigné ses pieds du palonnier en exploitant la troisième chaîne cinématique pour manoeuvre les pales du rotor anti-couple. Ladite faculté prioritaire est potentiellement obtenue à partir d'un geste volontaire du pilote humain, selon lequel il rapproche en cas de besoin ses pieds du palonnier. Une désactivation involontaire de la mise en oeuvre de la deuxième chaîne cinématique ou de la troisième chaîne cinématique est évitée.

Le signal de commande est notamment un signal électrique qui est émis en continu à partir d'un entraînement ininterrompu par le pilote humain de l'organe mobile de commande. Le signal de commande est proportionnel à la position de l'organe mobile de commande par rapport à une station prédéfinie de repos.

Les moyens de pilotage par objectif sont des moyens électromécaniques exploitant des signaux de commande électriques qui sont émis par l'organe mobile de commande et qui correspondent à des commandes de vol par objectif relatives à un état de progression à atteindre du giravion. Il est considéré par état de progression du giravion ce qui relève de son comportement au regard de sa vitesse de progression et/ou de sa direction de progression dans l'espace, de son domaine de vol et/ou d'une phase de vol. Les notions de domaine de vol et phase de vol correspondent à un état de progression du giravion dans une plage de fonctionnement propre au giravion, et sont des notions communément admises. Un dit état de progression du giravion est par exemple un état de progression en vol stationnaire, un état de progression à basses vitesses et/ou un état de progression en vol de croisière.

Pour une commande de vol en lacet, l'état de progression à atteindre du giravion est par exemple relatif à une vitesse angulaire de rotation du giravion autour de l'axe de lacet, à un angle de dérapage au sol du giravion et/ou à un facteur de charge latéral appliqué au giravion.

Le signal de commande émis par l'organe mobile de commande correspond à un repérage d'une position de l'organe mobile de commande par rapport à une station de repos prédéterminée. En station de repos, l'organe mobile de commande n'est pas entraîné par le pilote humain. Le signal de commande est un signal électrique émis à partir de l'entraînement de l'organe mobile de commande par l'homme, pilote humain du giravion notamment. Le signal de commande est émis en continu vers les moyens de calcul que comprend la deuxième chaîne cinématique, pour activer la manoeuvre des actionneurs.

L'émission du signal de commande correspond à une commande de vol par objectif, et est un signal de commande continu et proportionnel à la position de l'organe mobile de commande au regard de la station de repos. L'émission du signal de commande s'étend sur une durée et varie pour un même entraînement ininterrompu par l'homme, pilote humain du giravion notamment, de l'organe mobile de commande.

La commande de vol par objectif est notamment une information indifféremment numérique ou analogique issue du signal de commande. Le signal de commande est indifféremment généré de manière discrète ou continue.

Le signal de commande varie proportionnellement selon la variation de position d'entraînement de l'organe mobile de commande au regard de la station de repos. Une variation de l'entraînement de l'organe mobile de commande par le pilote humain peut être interrompue après positionnement et maintien par le dit pilote humain de l'organe mobile de commande en une position stable, dans laquelle un signal de commande relatif à une commande de vol par objectif souhaitée par le pilote humain est transmis en continu vers le calculateur par objectif.

La mise en oeuvre des actionneurs selon l'état de progression à atteindre du giravion, à partir des ordres de commande générés par le calculateur d'objectif, est notamment soumise à une émission continue et proportionnelle de signaux de commande relatifs aux commandes de vol opérées par le pilote humain à partir de l'entraînement continu de l'organe mobile de commande qu'il opère.

Le calculateur d'objectif est générateur d'ordres de commande qui induisent une activation de l'un au moins des actionneurs, tel qu'à partir d'une comparaison entre les signaux de commande relatifs à une commande de vol par objectif et un état effectif de progression du giravion qui est déterminé à partir d'informations de constat. Les ordres de commande sont issus de ladite comparaison, qui induit des commandes d'activation de l'actionneur au moins, par l'intermédiaire des moyens de calcul que comprend la deuxième chaîne cinématique.

Les commandes d'activation mettent en oeuvre les actionneurs qui manoeuvrent le rotor anti-couple, par l'intermédiaire de moyens de transmission mécanique interposés entre les actionneurs et le rotor anti-couple. Une manoeuvre du rotor anti-couple induit plus particulièrement une éventuelle variation de la valeur du pas collectif des pales de la voilure tournante qu'il comporte, pour provoquer une variation en lacet de la progression du giravion.

Les informations de constat sont notamment fournies par des moyens de détection de la progression du giravion et/ou de l'état de son environnement ambiant, tels que des moyens de mesure et/ou des moyens de calcul aptes à évaluer à un instant donné les conditions environnementales et/ou les conditions de vol et de progression du giravion.

Les informations de constat sont notamment générées à partir de divers organes de détection équipant communément le giravion. A titre d'exemples non limitatifs, de tels organes de détection comprennent l'un au moins d'un gyroscope, d'une centrale d'inertie, d'un anémomètre, d'un gyromètre, d'un magnétomètre, d'un dispositif de localisation satellitaire GPS (GPS : Global Positionning System en anglais) ou d'un dispositif de localisation satellitaire analogue, et/ou encore d'un dispositif à effet doppler.

Le palonnier et l'organe mobile de commande sont entraînés par le pilote humain indépendamment l'un de l'autre. Pour éviter un conflit entre des commandes de vol susceptibles d'être respectivement émises en simultané par le palonnier et par l'organe mobile de commande, le système de commande comporte de dits moyens d'inhibition, dont la mise en oeuvre est placée sous la dépendance de moyens de détection d'une intervention du pilote humain sur le palonnier, et notamment de l'entraînement du palonnier par le pilote humain provoquant indifféremment son déplacement ou son maintien en une position forcée. Selon une forme simple de réalisation, de tels moyens de détection sont susceptibles de comprendre un organe de détection d'efforts transmis à la chaîne cinématique et/ou un capteur de position du palonnier.

Le confort du pilote humain et la fiabilité des procédures de manoeuvre des actionneurs sont améliorées à partir de l'exploitation de la troisième chaîne cinématique, en substitution choisie par le pilote humain de la première chaîne cinématique. Le pilote humain est dispensé d'une connaissance de la variation effective de la valeur du pas collectif des pales de la voilure tournante du rotor anti-couple, son intervention sur l'organe mobile de commande pour provoquer une manoeuvre en lacet du giravion étant fondée sur des commandes de vol par objectif. Le pilote humain est aussi dispensé d'une prise en compte de l'environnement extérieur du giravion, tel que les conditions de vent par exemple, pour intervenir sur l'état de progression à atteindre du giravion à partir de l'entraînement qu'il opère sur l'organe mobile de commande.

Le palonnier est susceptible d'être exploité par le pilote humain en cas de besoin sous certaines conditions délicates de pilotage, tel qu'en cas d'environnement du giravion et/ou de situations de vol difficiles et/ou en cas de défaillance des moyens de calcul. En cas de conditions de vol délicates, le pilote humain dispose de la première chaîne cinématique pour manoeuvrer le rotor anti-couple et commander le vol en lacet du giravion à partir du palonnier.

Le pilote humain disposant de la troisième chaîne cinématique en surplus de la première chaîne cinématique, la commande de vol en lacet du giravion est confortable et fiabilisée à partir de l'exploitation de la troisième chaîne cinématique. La commande de vol en lacet du giravion est sécurisée au regard d'éventuels gestes aléatoires et involontaires du pilote humain sur le palonnier, dont l'exploitation est assujettie à un acte volontaire du pilote humain. Lorsque le pilote humain exploite la troisième chaîne cinématique, celui-ci place ses pieds à distance du palonnier.

En mode de pilotage automatique, le pilote humain peut éloigner ses pieds du palonnier en disposant si besoin de l'organe mobile de commande pour intervenir manuellement sur le pilotage en lacet du giravion. La posture du pilote humain selon laquelle ses pieds sont maintenus éloignés du palonnier empêche une désactivation de la fonction de tenue de référence d'un pilote automatique équipant le cas échéant le giravion.

Selon une forme avantageuse de réalisation, l'organe mobile de commande est à manoeuvre manuelle en étant intégré à une manette de commande. L'organe mobile de commande est plus particulièrement agencé en bouton à mobilité au moins monodirectionnelle d'émission du signal de commande. La manette de commande est de préférence une manette de commande d'une variation de pas collectif, qui est affectée à la mise en oeuvre d'un rotor principal équipant le giravion.

Le confort de pilotage en lacet du giravion par le pilote humain est avantageusement conforté à partir d'un agencement de l'organe mobile de commande en bouton à mobilité monodirectionnelle manoeuvrable confortablement par le pilote humain, tel qu'au moyen de son pouce. L'organe mobile de commande est notamment émetteur d'au moins un signal de commande électrique ou par analogie optique, qui est indifféremment de type numérique ou de type analogique relatif à une consigne de vol par objectif.

Par exemple, l'organe mobile de commande est agencé en molette tournante, en curseur, en chapeau chinois ou en bille omnidirectionnelle. L'organe mobile de commande est générateur d'un signal électrique, en étant de préférence associé à des moyens de mesure de l'amplitude de son entraînement par le pilote humain, qui sont indifféremment fondés sur une mesure d'efforts et/ou de déflections. Un tel bouton est susceptible d'être avantageusement implanté sur une manette de commande affectée à la manoeuvre d'un rotor principal équipant le giravion, manette de commande d'une variation de pas collectif des pales de la voilure tournante du rotor principal notamment.

Les moyens de pilotage par objectif comprennent plus particulièrement des moyens de traitement du signal de commande émis à partir de l'entraînement par le pilote humain de l'organe mobile de commande. Ce signal de commande correspond à un signal électrique relevant d'une commande de vol par objectif, qui est par exemple relatif indifféremment à une information de vitesse angulaire de lacet ou une information d'un facteur de charge latéral ou une information de dérapage sol.

Le calculateur d'objectif est générateur d'ordres de commande à partir d'une comparaison entre les signaux de commande relatifs à une commande de vol par objectif et un état effectif de progression du giravion. Les ordres de commande issus de ladite comparaison induisent des commandes d'activation de l'actionneur par l'intermédiaire des moyens de calcul que comprend la deuxième chaîne cinématique.

Le calculateur d'objectif comprend des moyens de recentrage de l'actionneur « série », par contrôle permanent de l'activation de l'actionneur « trim », indépendamment d'un entraînement par le pilote humain de l'organe mobile de commande générateur d'un quelconque signal de commande.

Selon une forme de réalisation du calculateur d'objectif, celui-ci comprend notamment :
*) un premier module de calcul qui est en relation avec l'organe mobile de commande et qui est générateur d'un signal de consigne à partir d'un signal de commande émis par l'organe mobile de commande. Le signal de consigne est notamment pondéré par une information de constat relative à une phase de vol du giravion, tel qu'un état de progression stationnaire, à basses vitesses et/ou à vitesse de croisière. L'information de constat est une information d'évaluation à un instant donné des conditions de vol du giravion. Le signal de consigne est rendu dépendant du domaine de vol du giravion, tel que typiquement en situation de vol stationnaire ou en situation de vol en croisière. Par exemple, la prise en compte du domaine de vol permet de générer une consigne de vitesse angulaire en lacet du giravion à basses vitesses.
*) un deuxième module de calcul qui est en relation avec le premier module et qui est générateur d'un ordre de commande. L'ordre de commande est issu du traitement de la différence entre le signal de consigne et une information de constat relative à un changement d'état de progression du giravion. Le deuxième module est dédié à un asservissement de l'état de progression du giravion sur les signaux de consigne préalablement pondéré qui sont issus du premier module.

Le calculateur d'objectif est en relation avec un troisième module de calcul que comprend la deuxième chaîne cinématique, et plus particulièrement les moyens de calcul du pilote automatique. Le troisième module est générateur d'au moins une commande d'activation de l'un au moins des actionneurs, à partir d'au moins un ordre de commande généré par le deuxième module.

La présente invention a aussi pour objet une méthode de commande de vol en lacet d'un giravion, à partir de la mise en oeuvre d'un système de commande tel qu'il vient d'être décrit. La méthode de commande de la présente invention est principalement reconnaissable en ce qu'elle comprend les opérations suivantes :
*) émission vers le calculateur d'objectif du signal de commande transmis en continu à partir d'un entraînement par le pilote humain du giravion de l'organe mobile de commande. Le signal de commande relève d'une commande de vol par objectif correspondante à un état de progression à atteindre du giravion. Le signal de commande est proportionnel à la position de l'organe mobile de commande par rapport à une position neutre correspondante à une position de repos prédéfinie.
*) détection par au moins un capteur approprié équipant le giravion, d'au moins une information de constat relative à un état effectif de progression du giravion. L'information de constat est une information d'évaluation à un instant donné des conditions de vol du giravion.
*) déduction par le calculateur d'objectif d'au moins un ordre de commande par comparaison entre le signal de commande et l'information de constat.
*) à partir de l'ordre de commande, génération par les moyens de calcul de la deuxième chaîne cinématique d'une commande d'activation de l'un au moins des actionneurs.
*) transmission de la commande d'activation par les moyens de calcul de la deuxième chaîne cinématique vers au moins un actionneur correspondant pour provoquer une manoeuvre du rotor anti-couple apte à procurer un passage du giravion depuis l'état effectif de progression vers l'état de progression à atteindre.

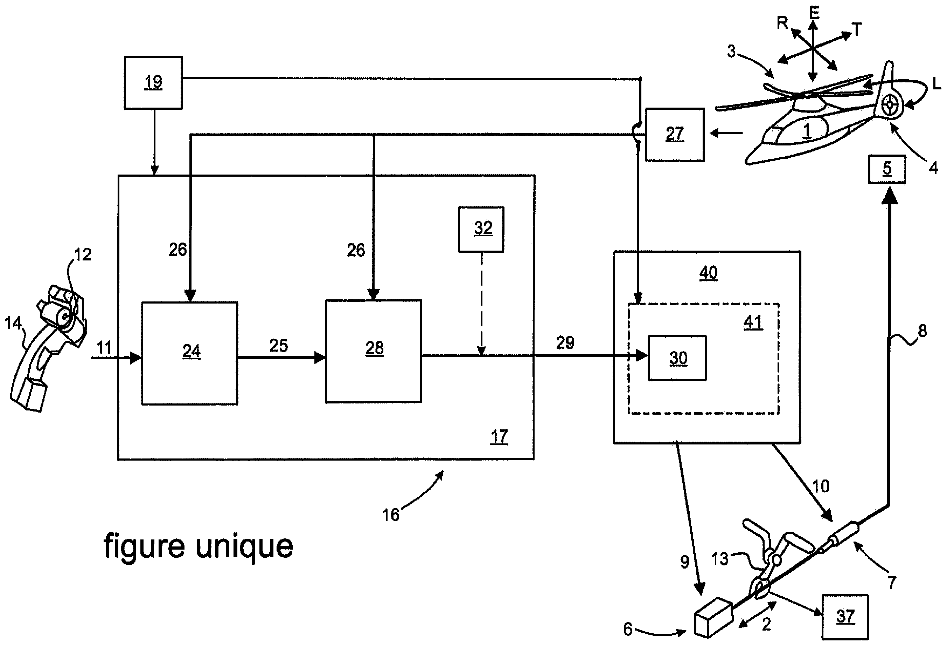

La présente invention va être décrite en relation avec la figure unique de la planche annexée, qui représente schématiquement un système de commande de vol en lacet pour giravion, selon un exemple de réalisation de la présente invention.

Sur la figure, un giravion 1 est équipé d'un rotor principal 3 et d'un rotor anti-couple 4 qui comprennent chacun une voilure tournante munie de pales. Une manoeuvre des pales du rotor principal 3 par un pilote du giravion permet de changer l'état de progression du giravion 1 suivant des orientations de vol correspondantes, notamment en tangage T, en roulis R et en élévation E. Une manoeuvre des pales du rotor anti-couple 4 par un pilote du giravion permet de changer l'état de progression du giravion 1 en lacet L. Le pilote du giravion est susceptible d'être un pilote humain ou un pilote automatique.

La variation du pas des pales du rotor anti-couple 4 est provoquée par une servocommande 5, à partir d'un système de commande de vol en lacet équipant le giravion 1. La servocommande 5 est placée sur un mécanisme de transmission mécanique d'efforts 8. La mise en oeuvre du mécanisme de transmission mécanique 8 est placée sous la dépendance d'un palonnier 13, ou sous la dépendance d'actionneurs 6,7. De tels actionneurs sont notamment constitués d'un actionneur « trim » 6 qui est placé en parallèle du palonnier 13, et d'un actionneur « série » 7. Traditionnellement, le mécanisme de transmission 8 comporte des organes de transmission mécanique distante tels qu'agencés en bielles ou analogues. La manoeuvre du rotor anti-couple 4 est provoquée par l'intermédiaire de chaînes cinématiques distinctes et indépendantes au regard de leur fonctionnement propre.

Une première chaîne cinématique est une chaîne cinématique mécanique traditionnelle qui met en oeuvre le palonnier 13 et le mécanisme de transmission 8. Le palonnier 13 est un organe mobile de commande du type entraîné par l'homme au moyen de ses membres inférieurs, et émet des commandes de vol mécaniques 2 qui sont transmises à la servocommande 5 par l'intermédiaire du mécanisme de transmission 8.

Une deuxième chaîne cinématique est une chaîne cinématique électromécanique qui met en oeuvre un pilote automatique 40 comprenant des moyens de calcul 41. Le pilote automatique 40 permet notamment de procurer une fonction de tenue d'une consigne de référence. Le pilote automatique 40 est activé en substitution de la première chaîne cinématique.

Une troisième chaîne cinématique est mise en oeuvre en substitution de la première chaîne cinématique et de la deuxième chaîne cinématique. La troisième chaîne cinématique permet au pilote humain du giravion de diriger le giravion à partir de commandes de vol par objectif qu'il émet au moyen d'un organe mobile de commande 12 du type entraîné par l'homme.

L'organe mobile de commande 12 est émetteur de commandes de vol par objectif, sous forme de signaux de commande 11 électriques. L'organe mobile de commande 12 est entraîné par le pilote humain au moyen de son pouce plus particulièrement, en étant agencé en bouton implanté sur une manette de commande 14. Une telle manette de commande 14 est notamment une manette de commande de variation de pas collectif des pales que comporte la voilure tournante du rotor principal 3. Cette manette de commande 14 est avantageusement implantée sur un siège de pilotage.

La troisième chaîne cinématique met en oeuvre des moyens de pilotage par objectif 16 comprenant un calculateur d'objectif 17 qui est en relation avec les moyens de calcul 41 du pilote automatique 40. Le calculateur par objectif est apte à traiter les signaux de commande 11 émis par l'organe mobile de commande 12, et à générer des ordres de commande 29 transmis aux moyens de calcul 41 pour activer les actionneurs 6,7. A partir des ordres de commande, les moyens de calcul génèrent et transmettent vers les actionneurs 6,7 des commandes d'activation 9,10. Une activation des actionneurs permet de provoquer une manoeuvre du rotor anti-couple 4 par l'intermédiaire des moyens de transmission 8, en substitution de l'exploitation du palonnier 13 par le pilote humain et de la fonction de tenue d'une consigne de référence par le pilote automatique 40

Des moyens d'inhibition 19 de la mise en oeuvre de la deuxième chaîne cinématique et de la troisième chaîne cinématique, sont activés par des moyens de détection 37 d'un entraînement par le pilote humain du palonnier 13. De tels moyens de détection 37 sont par exemple constitués de capteurs d'efforts 37 placés sur le mécanisme de transmission 8. Les moyens d'inhibition 19 évitent un éventuel conflit entre des commandes de vol différentes qui seraient respectivement émises par le palonnier 13 et par l'organe mobile de commande 12. Les moyens d'inhibition 37 sont essentiellement dédiés à autoriser un pilotage prioritaire du giravion au moyen du palonnier 13 par l'intermédiaire de la première chaîne cinématique.

Le calculateur d'objectif 17 comprend un premier module de calcul 24 de traitement du signal de commande 11 qui est émis en continu par l'organe mobile de commande 12. Le premier module 24 génère un signal de consigne 25 à partir du signal de commande 11, qui est pondéré par une information de constat 26 relative à une phase de vol du giravion 1. L'information de constat 26 est fournie par un ou plusieurs capteurs 27 appropriés dont est équipé le giravion 1.

Un modèle de pilotage convertit le signal de commande 11 en une information relative à un état de progression à atteindre du giravion au regard de sa manoeuvre en lacet L. Le modèle de pilotage permet d'évaluer l'amplitude et le comportement dynamique d'évolution du signal de commande 11, qui est transmis en continu à partir de la manipulation par le pilote humain de l'organe mobile de commande 12. Un tel modèle de pilotage est typiquement sous forme de transfert de données de degré « n », selon lequel un gain définit la sensibilité en régime statique, à partir d'un rapport entre une consigne de vitesse angulaire et une déflection de l'organe mobile de commande 12.

Le signal de consigne 25 est transmis à un deuxième module de calcul 28, qui est dédié à un asservissement du signal de consigne 25 à des consignes de stabilisation et/ou de coordination entre des changements de direction du giravion 1. Le deuxième module 28 est récepteur d'informations de constat 26 relatives à un état effectif de progression du giravion 1, et génère un ordre de commande 29.

L'ordre de commande 29 est transmis à un troisième module de calcul 30 que comprennent les moyens de calcul 41 du pilote automatique 40. Le troisième module de calcul 30 est générateur de commandes d'activation 9,10 des actionneurs 6,7.

Les capteurs 27 équipant le giravion 1 mesurent la vitesse angulaire effective en lacet et fournissent une information de constat 26 au premier module de calcul 24 et/ou au deuxième module de calcul 28. Une éventuelle erreur de pilotage est évaluée par confrontation entre le signal de commande 11 et l'information de constat 26. Des premiers moyens de correction 32, tels que de type PID (Proportionnel Intégral Dérivé), déterminent un ordre de commande 29 en lacet L en asservissant une éventuelle erreur de pilotage à une valeur nulle.

## Revendications

1. Système de commande de vol en lacet (L) d'un giravion (1) équipé d'un rotor anti-couple (4), le système de commande comprenant :
*) au moins une première chaîne cinématique mettant en oeuvre un palonnier (13) entraîné par un pilote humain, qui est en relation avec le rotor anti-couple (4) par l'intermédiaire d'un mécanisme de transmission mécanique distante (8) apte à provoquer une variation de pas collectif de pales équipant le rotor anti-couple (4),
*) au moins une deuxième chaîne cinématique comportant des actionneurs (6,7) de mise en oeuvre du mécanisme de transmission mécanique distante (8), dont un « actionneur trim » et « un actionneur série », la deuxième chaîne cinématique mettant en oeuvre un pilote automatique (40) qui comprend des moyens de calcul (41) la mise en oeuvre des moyens de calcul (41) étant placée sous la dépendance d'un bouton de commande actionnable par un pilote humain et induisant une activation d'au moins l'un des actionneurs (6,7)de mise en oeuvre du dit mécanisme de transmission mécanique distante en substitution de la première chaîne cinématique,
*) des moyens d'inhibition (19) au moins de la deuxième chaîne cinématique de commande dont la mise en oeuvre est placée sous la dépendance de moyens de détection (37) d'un entraînement par le pilote humain du palonnier (13),
**caractérisé en ce qu'**il comprend une troisième chaîne cinématique qui intègre des moyens de pilotage par objectif (16) dont la mise en oeuvre est placée sous la dépendance d'un organe mobile de commande (12) entraîné par un pilote humain, l'organe mobile de commande (12) étant émetteur d'un signal de commande (11) vers un calculateur d'objectif (17) qui génère vers les moyens de calcul (41) de la deuxième chaîne cinématique un ordre de commande (29) en lacet relatif à un état de progression à atteindre du giravion (1), la mise en oeuvre de la troisième chaîne cinématique étant placée sous la dépendance des moyens d'inhibition (19), une intervention par le pilote humain sur le palonnier (13) désactivant la mise en oeuvre de la troisième chaîne cinématique.

2. Système de commande selon la revendication 1,
**caractérisé en ce que** le signal de commande (11) est un signal électrique émis en continu à partir d'un entraînement ininterrompu par l'homme de l'organe mobile de commande (12), le signal de commande (11) étant proportionnel à la position de l'organe mobile de commande (12) par rapport à une station prédéterminée de repos.

3. Système de commande selon l'une quelconque des revendications 1 et 2,
**caractérisé en ce que** l'organe mobile de commande (12) est à manoeuvre manuelle, en étant intégré à une manette de commande (14).

4. Système de commande selon la revendication 3,
**caractérisé en ce que** l'organe mobile de commande (12) est agencé en bouton à mobilité monodirectionnelle d'émission du signal de commande (11).

5. Système de commande selon l'une quelconque des revendications 3 et 4,
**caractérisé en ce que** la manette de commande (14) est une manette de commande d'une variation de pas collectif (14) affectée à la mise en oeuvre d'un rotor principal (3) équipant le giravion (1).

6. Système de commande selon l'une quelconque des revendications 1 à 5,
**caractérisé en ce que** le signal de commande (11) est relatif indifféremment à une information de vitesse angulaire de lacet (L) ou une information d'un facteur de charge latéral ou une information de dérapage sol.

7. Système de commande selon l'une quelconque des revendications 1 à 6,
**caractérisé en ce que** le calculateur d'objectif (17) est générateur d'ordres de commande (29) à partir d'une comparaison entre les signaux de commande (11) relatifs à une commande de vol par objectif et un état effectif de progression du giravion, les ordres de commande (29) issus de ladite comparaison induisant des commandes d'activation (9,10) de l'un au moins des actionneurs (6,7) par l'intermédiaire des moyens de calcul (41) que comprend la deuxième chaîne cinématique.

8. Système de commande selon l'une quelconque des revendications 1 à 5,
**caractérisé en ce que** le calculateur d'objectif (17) comprend des moyens de recentrage de l'actionneur « série » (7) par contrôle permanent de l'activation de l'actionneur « trim » (6), indépendamment d'un entraînement par le pilote humain de l'organe mobile de commande (12) générateur d'un quelconque signal de commande (11).

9. Système de commande selon l'une quelconque des revendications 1 à 8,
**caractérisé en ce que** le calculateur d'objectif (17) comprend :
*) un premier module (24) de calcul qui est en relation avec l'organe mobile de commande (12) et qui est générateur d'un signal de consigne (25) à partir d'un signal de commande (11) émis par l'organe mobile de commande (12), le signal de consigne (25) étant pondéré par une information de constat (26) d'évaluation à un instant donné des conditions de vol du giravion (1) et relative à une phase de vol du giravion (1),
*) un deuxième module (28) de calcul qui est en relation avec le premier module (24) et qui est générateur d'un ordre de commande (29) issu du traitement de la différence entre le signal de consigne (25) et une information de constat (26) relative à un changement d'état de progression du giravion.

10. Système de commande selon la revendication 9,
**caractérisé en ce que** le calculateur d'objectif (17) est en relation avec un troisième module (30) de calcul, qui est générateur d'au moins une commande d'activation (9,10) de l'un au moins des actionneurs (6,7), à partir d'au moins un ordre de commande (29) généré par le deuxième module (28).

11. Méthode de commande de vol en lacet (L) d'un giravion (1) par mise en oeuvre d'un système de commande selon l'une quelconque des revendications 1 à 10,
**caractérisée en ce qu'**elle comprend les opérations suivantes :
*) émission vers le calculateur d'objectif (17) du signal de commande (11) transmis en continu à partir d'un entraînement par le pilote humain de l'organe mobile de commande (12), le signal de commande (11) relevant d'une commande de vol par objectif correspondante à un état de progression à atteindre du giravion (1),
*) détection par au moins un capteur (27) approprié équipant le giravion d'au moins une information de constat (26) d'évaluation à un instant donné des conditions de vol du giravion (1) et relative à un état effectif de progression du giravion (1),
*) déduction par le calculateur d'objectif (17) d'au moins un ordre de commande (29) par comparaison entre le signal de commande (11) et l'information de constat (26),
*) à partir de l'ordre de commande, génération par les moyens de calcul (41) de la deuxième chaîne cinématique d'une commande d'activation (9,10) de l'un au moins des actionneurs (6,7),
*) transmission de la commande d'activation (9,10) par les moyens de calcul (41) de la deuxième chaîne cinématique vers au moins un actionneur correspondant (6,7), pour provoquer une manoeuvre du rotor anti-couple (4), apte à procurer un passage du giravion (1) depuis l'état effectif de progression vers l'état de progression à atteindre.

## Patentansprüche

1. Flugsteuerungssystem der Gierbewegung (L) eines Drehflügelflugzeugs (1) mit einem Drehmomentausgleichsrotor (4), wobei das Steuersystem aufweist:
*) mindestens eine erste kinematische Kette, die einen von einem menschlichen Piloten betätigten Steuerknüppel (13) einsetzt, der über einen Mechanismus (8) zur mechanischen Übertragung über eine Distanz mit dem Drehmomentausgleichsrotor (4) in Beziehung steht, und der eine Änderung des kollektiven Blattanstellwinkels der Rotorblätter, mit denen der Drehmomentausgleichsrotor (4) versehen ist, bewirken kann,
*) mindestens eine zweite kinematische Kette mit Stellgliedern (6, 7) zum Betätigen des Mechanismus (8) zur mechanischen Übertragung über eine Distanz, darunter ein "Trimmstellglied" und ein "serielles Stellglied", wobei die zweite kinematische Kette einen Autopiloten (40), der Rechenmittel (41) aufweist, einsetzt, wobei der Einsatz der Rechenmittel (41) von einem Steuerknopf abhängig gemacht ist, der von einem menschlichen Piloten betätigbar ist, und zu einer Aktivierung mindestens eines der Stellglieder (6, 7) für den Einsatz des Mechanismus zur mechanischen Übertragung über eine Distanz unter Ersetzung der ersten kinematischen Kette führt,
*) Einrichtungen (19) zur Sperrung mindestens der zweiten kinematischen Steuerungskette, deren Einsatz von Mitteln (37) zur Erfassung einer Betätigung des Steuerknüppels (13) durch den menschlichen Piloten abhängig gemacht wird,
**dadurch gekennzeichnet, dass** das System eine dritte kinematische Kette aufweist, die Mittel (16) zur zielorientierten Flugsteuerung umfasst, deren Einsatz von einem beweglichen Steuerorgan (12), das von einem menschlichen Piloten bedient wird, abhängig gemacht wird, wobei das bewegliche Steuerorgan (12) ein Steuersignal (11) an einen Zielrechner (17) sendet, der einen Gierbewegungsbefehl (29), der an die Rechenmittel (41) der zweiten kinematischen Kette gerichtet ist, erzeugt, bezüglich einem von dem Drehflügelflugzeug (1) zu erreichenden Vortriebszustand, wobei der Einsatz der dritten kinematischen Kette von Sperreinrichtungen (19) abhängig gemacht wird, wobei ein Eingreifen des menschlichen Piloten über den Steuerknüppel (13) den Einsatz der dritten kinematischen Kette deaktiviert.

2. Steuersystem nach Anspruch 1,
**dadurch gekennzeichnet, dass** das Steuersignal (11) ein elektrisches Signal ist, das kontinuierlich ausgesendet wird ausgehend von einer ununterbrochenen Betätigung des beweglichen Steuerorgans (12) durch den Menschen, wobei das Steuersignal (11) proportional zu der Stellung des beweglichen Steuerorgans (12) relativ zu einer vorbestimmten Ruhestellung ist.

3. Steuersystem nach einem der Ansprüche 1 und 2,
**dadurch gekennzeichnet, dass** das bewegliche Steuerorgan (12) manuell betätigbar ist, indem es in einen Steuerhebel (14) integriert ist.

4. Steuersystem nach Anspruch 3,
**dadurch gekennzeichnet, dass** das bewegliche Steuerorgan (12) ausgebildet ist als ein in einer Richtung beweglicher Knopf zur Aussendung des Steuersignals (11).

5. Steuersystem nach einem der Ansprüche 3 und 4,
**dadurch gekennzeichnet, dass** der Steuerhebel (14) ein Hebel zur Steuerung einer Änderung des kollektiven Blattanstellwinkels ist, der dem Einsatz eines Hauptrotors (3), mit dem das Drehflügelflugzeug (1) ausgerüstet ist, zugeordnet ist.

6. Steuersystem nach einem der Ansprüche 1 bis 5,
**dadurch gekennzeichnet, dass** das Steuersignal (11) sich auf eine Gierbewegungswinkelgeschwindigkeitsinformation (L) oder auf eine Information über einen Seitenlastfaktor oder eine Information über den Schiebewinkel bezieht.

7. Steuersystem nach einem der Ansprüche 1 bis 6,
**dadurch gekennzeichnet, dass** der Zielrechner (17) Steuerbefehle (29) erzeugt, ausgehend von einem Vergleich zwischen den Steuersignalen (11), die sich auf eine zielorientierte Flugsteuerung beziehen, und einem effektiven Vortriebszustand des Drehflügelflugzeugs, wobei die Steuerbefehle (29), die aus dem Vergleich hervorgehen, Steuerbefehle (9, 10) zur Aktivierung mindestens eines der Stellglieder (6, 7) über durch Rechenmittel (41), die die zweite kinematische Kette aufweist, erzeugen.

8. Steuersystem nach einem der Ansprüche 1 bis 5,
**dadurch gekennzeichnet, dass** der Zielrechner (17) Mittel zur Zurückstellung des seriellen Stellglieds (7) durch eine permanente Kontrolle der Betätigung des "Trimmstellglieds" (6) aufweist unabhängig von einer Betätigung des beweglichen Steuerorgans (12), das ein beliebiges Steuersignal (11) erzeugt, durch den menschlichen Piloten.

9. Steuersystem nach einem der Ansprüche 1 bis 8,
**dadurch gekennzeichnet, dass** der Zielrechner (17) aufweist:
*) ein erstes Rechenmodul (24), das mit dem beweglichen Steuerorgan (12) in Beziehung steht und das ein Sollwertsignal (25) ausgehend von einem Steuersignal (11) erzeugt, das von dem beweglichen Steuerorgan (12) ausgesendet wird, wobei das Sollwertsignal (25) durch eine Information (26) der Feststellung der Entwicklung von Flugbedingungen des Drehflügelflugzeugs zu einem gegebenen Zeitpunkt und bezüglich einer Flugphase des Drehflügelflugzeugs (1) gewichtet wird,
*) ein zweites Rechenmodul (28), das mit dem ersten Modul (24) in Beziehung steht und das einen Steuerbefehl (29) erzeugt, der sich aus der Verarbeitung der Differenz zwischen dem Sollwertsignal (25) und einer Information (26) über die Feststellung bezüglich einer Zustandsänderung des Vortriebs des Drehflügelflugzeugs ergibt.

10. Steuersystem nach Anspruch 9,
**dadurch gekennzeichnet, dass** der Zielrechner (17) mit einem dritten Rechenmodul (30) in Beziehung steht, das mindestens einen Befehl (9, 10) zur Betätigung mindestens eines der Stellglieder (6, 7) erzeugt, ausgehend von mindestens einem Steuerbefehl (29), der von dem zweiten Modul (28) erzeugt wurde.

11. Flugsteuerungsverfahren einer Gierbewegung (L) eines Drehflügelflugzeugs (1) durch Einsatz eines Steuersystems nach einem der Ansprüche 1 bis 10,
**dadurch gekennzeichnet, dass** das Verfahren folgende Schritte aufweist:
*) Aussenden des Steuersignals (11), das kontinuierlich ausgehend von einer Betätigung des beweglichen Steuerorgans (12) durch den menschlichen Piloten übertragen wird, an den Zielrechner (17), wobei das Steuersignal (11) von einer zielorientierten Flugsteuerung abhängt, die von einem von dem Drehflügelflugzeug (1) zu erreichenden Vortriebszustand abhängt,
*) Erfassen durch mindestens einen geeigneten Sensor (27), mit dem das Drehflügelflugzeug ausgerüstet ist, mindestens einer Information zur Feststellung (26) der Entwicklung von Flugbedingungen des Drehflügelflugzeugs (1) zu einem gegebenen Zeitpunkt und bezüglich eines effektiven Zustands des Vortriebs des Drehflügelflugzeugs (1),
*) Ableiten mindestens eines Steuerbefehls (29) durch den Zielrechner (11) durch einen Vergleich zwischen dem Steuersignal (11) und der festgestellten Information (26),
*) ausgehend von dem Steuerbefehl Erzeugen eines Befehls (9, 10) zur Aktivierung mindestens eines der Stellglieder (6, 7) durch die Rechenmittel (41) der zweiten kinematischen Kette,
*) Übertragen des Aktivierungsbefehls (9,10) an mindestens ein entsprechendes Stellglied (6, 7) durch die Rechenmittel (41) der zweiten kinematischen Kette, um eine Betätigung des Drehmomentausgleichsrotors (4) zu bewirken, die einen Übergang des Drehflügelflugzeugs (1) aus dem effektiven Vortriebszustand in den zu erreichenden Vortriebszustand bewirkt.

## Claims

1. Control system for controlling flight in yaw (L) of a rotorcraft (1) equipped with an anti-torque rotor (4), the control system comprising:
*) at least a first kinematic chain implementing a rudder bar (13) driven by a human pilot, which is in communication with the anti-torque rotor (4) via a remote mechanical transmission mechanism (8) suitable for bringing about a variation of collective pitch of blades with which the anti-torque rotor (4) is equipped,
*) at least a second kinematic chain comprising actuators (6,7) for implementing the remote mechanical transmission mechanism (8), including a "trim actuator" and a "series actuator", the second kinematic chain implementing an autopilot (40) which comprises calculation means (41), the implementation of the calculation means (41) being placed under the dependence of a control button actuatable by a human pilot and giving rise to an activation of at least one of the actuators (6,7) for implementing said remote mechanical transmission mechanism in substitution for the first kinematic chain,
*) inhibition means (19) for inhibiting at least the second kinematic control chain, the implementation of which is placed under the dependence of detection means (37) for detecting a driving of the rudder bar (13) by the human pilot, **characterised in that** it comprises a third kinematic chain which incorporates objective piloting means (16), the implementation of which is placed under the dependence of a movable control member (12) driven by the human pilot, the movable control member (12) emitting a control signal (11) to an objective computer (17) which generates to the calculation means (41) of the second kinematic chain a yaw control order (29) relating to a state of progression to be achieved of the rotorcraft (1), the implementation of the third kinematic chain being placed under the dependence of the inhibition means (19), an intervention by the human pilot on the rudder bar (13) deactivating the implementation of the third kinematic chain.

2. Control system according to claim 1,
**characterised in that** the control signal (11) is an electrical signal emitted continuously on the basis of an uninterrupted driving of the movable control member (12) by the human, the control signal (11) being proportional to the position of the movable control member (12) relative to a predetermined rest station.

3. Control system according to any one of claims 1 and 2,
**characterised in that** the movable control member (12) is manually operated, being incorporated in a control lever (14).

4. Control system according to claim 3,
**characterised in that** the movable control member (12) is arranged as a button with monodirectional mobility for emitting the control signal (11).

5. Control system according to any one of claims 3 and 4,
**characterised in that** the control lever (14) is a collective pitch varying control lever (14) assigned to the implementation of a main rotor (3) with which the rotorcraft (1) is equipped.

6. Control system according to any one of claims 1 to 5,
**characterised in that** the control signal (11) relates equally well to information about angular yaw rate (L) or information about a lateral load factor or information about sideslip relative to the ground.

7. Control system according to any one of claims 1 to 6,
**characterised in that** the objective computer (17) generates control orders (29) on the basis of a comparison between the control signals (11) relating to an objective flight control and an actual state of progression of the rotorcraft, the control orders (29) derived from said comparison giving rise to activation controls (9,10) for activating at least one of the actuators (6,7) via the calculation means (41) which the second kinematic chain comprises.

8. Control system according to any one of claims 1 to 5,
**characterised in that** the objective computer (17) comprises means for re-centring the "series" actuator (7) by continuous control of the activation of the "trim" actuator (6), independently of a driving by the human pilot of the movable control member (12) generating any control signal (11).

9. Control system according to any one of claims 1 to 8,
**characterised in that** the objective computer (17) comprises:
*) a first calculation module (24) which is in communication with the movable control member (12) and which generates a setpoint signal (25) on the basis of a control signal (11) emitted by the movable control member (12), the setpoint signal (25) being weighted by observation information (26) for evaluation at a given instant of the flight conditions of the rotorcraft (1) and relating to a stage of flight of the rotorcraft (1),
*) a second calculation module (28) which is in communication with the first module (24) and which generates a control order (29) derived from the processing of the difference between the setpoint signal (25) and observation information (26) relating to a change of the state of progression of the rotorcraft.

10. Control system according to claim 9,
**characterised in that** the objective computer (17) is in communication with a third calculation module (30) which generates at least one activation control (9,10) for activating at least one of the actuators (6,7), on the basis of at least one control order (29) generated by the second module (28).

11. Method for controlling flight in yaw (L) of a rotorcraft (1) by implementing a control system according to any one of claims 1 to 10,
**characterised in that** it comprises the following operations:
*) emission to the objective computer (17) of the control signal (11) transmitted continuously from a driving by the human pilot of the movable control member (12), the control signal (11) pertaining to an objective flight control corresponding to a state of progression to be achieved of the rotorcraft (1),
*) detection, by at least one suitable sensor (27) with which the rotorcraft is equipped, of at least observation information (26) for evaluation at a given instant of the flight conditions of the rotorcraft (1) and relating to an actual state of progression of the rotorcraft (1),
*) deduction by the objective computer (17) of at least one control order (29) by comparison between the control signal (11) and the observation information (26),
*) on the basis of the control order, generation by the calculation means (41) of the second kinematic chain of an activation control (9,10) for activating at least one of the actuators (6,7),
*) transmission of the activation control (9,10) by the calculation means (41) of the second kinematic chain to at least one corresponding actuator (6,7), in order to bring about a manoeuvring of the anti-torque rotor (4), suitable for obtaining a change of the rotorcraft (1) from its actual state of progression to the state of progression to be achieved.
